(19) Europäisches Patentamt
European Patent Office
Office européen des brevets

(11) **EP 2 280 182 A1**

(12) **EUROPEAN PATENT APPLICATION**

(43) Date of publication:
**02.02.2011 Bulletin 2011/05**

(51) Int Cl.:
*F16D 13/58* (2006.01)    *F16D 13/08* (2006.01)

(21) Application number: **10171318.8**

(22) Date of filing: **29.07.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(30) Priority: **30.07.2009 IT CR20090031** | (71) Applicant: **CGE Services & Trading SRL**<br>**46043 Castiglione delle Stiviere (MN) (IT)**<br><br>(72) Inventor: **Rebecchi, Gabriele**<br>**46043  Castiglione delle Stiviere (MN) (IT)**<br><br>(74) Representative: **Marcio', Paola et al**<br>**Ing. Mari & C. SRL**<br>**Via Garibotti, 3**<br>**26100 Cremona (IT)** |

(54)    **A clutch member with motion transmission mechanism with coil spring and friction engagement**

(57)    A clutch member with motion transmission mechanism with coil spring and friction engagement comprising a first drum (1) associated with a drive shaft (2) and a second drum (3) associated with a driven shaft (4), wherein said drums have the same external diameter and said shafts (2, 4) are coaxial; also comprising a driving coil spring (5) arranged around the two drums, having a first and a second end (10, 11); a first sleeve (6) arranged around said spring (5); a second sleeve (7) rotatingly associated with the first sleeve (6); a flange (8) associated with said first drum (1); a control lever (9) acting on said second sleeve (7) to move said sleeves (6, 7) toward said flange (8) which is arranged for acting as a shoulder for said sleeves (6, 7); where the first end (10) of the coil spring (5) is fastened to the first sleeve (6) and the second end (11) is fastened to the second drum (3) and said first sleeve (6) is slidingly associated with said driven shaft (4).

Fig. 1

EP 2 280 182 A1

## Description

The invention relates to the sector of clutch members for selective transmission of a rotational motion from a driving shaft always in movement to a driven shaft, particularly suitable for use on moving machine tools and vehicles in general.

More in detail, the invention relates to a clutch member in which the motion transmission mechanism is produced through a substantially cylindrical helical extension spring, arranged straddling the two shafts, wherein friction engagement means, which can be selectively activated or deactivated by external control means, determine driving of the two ends of said spring which, winding around said shafts, cause rotation in unison. A device of this type for use in photocopying machines is known from the patent US 4,440,280. The member described comprises a first drum associated with a driving shaft and a second drum associated with a driven shaft. The driving shaft and the driven shaft are coaxial, in a manner such that the two drums are also coaxial. A coil spring is arranged around the two drums having the same external diameter. One end of the spring is fastened to the first drum and the other end is fastened to a first sleeve arranged therearound. A second sleeve is rotatingly mounted on the first sleeve and comprises a rubber ring facing a flange of the second drum. In idle mode, i.e. with no transmission of motion, the spring does not touch the two drums, the first and the second sleeve and the coil spring rotate with the first drum but the second drum is motionless. When the second sleeve is pressed against the flange of the second drum by a control disc that acts thereon, the rubber ring comes into contact with the flange, interrupting integral rotation between the first and the second sleeve. The spring therefore winds tightly around the first and the second drum to transfer the rotation movement of the first drum also to the second drum.

A device of this kind presents limits and drawbacks that make it unsuitable for use on vehicles and machine tools that require to transfer high powers, forces and driving torques between two shafts and which work in movement, travelling over grounds that may even be very rough.

In fact, continuous rotation also in idle mode of the spring and of the sleeves causes an undesirable increase in the inertia of the driving shaft, and therefore, when the engine is started up, this can cause closing of the spring around the two drums and consequent undesirable transmission of motion to the driven shaft.

Moreover, due to sudden movements, impacts, rapid decelerations, particular orientations in space assumed by the transmission member, etc., accidental and fortuitous contact can take place between the second sleeve and the flange of the second drum, causing involuntary engagement of the transmission member.

Finally, if the driving shaft remains in movement at length without any transmission of motion to the driven shaft, rubbing of the control disc on the second sleeve can cause overheating of the transmission member and malfunctioning of the member itself.

The invention aims to overcome these limits, by producing a clutch member particularly suitable for use on moving means and vehicles in general, which makes use of machines safe for operators, does not cause undesirable actuation of the driven shaft, does not produce frictions, is reliable, of simple construction and does not require particular maintenance operations.

These aims are achieved with a clutch member with motion transmission mechanism with coil spring and friction engagement comprising:

- a first drum associated with a driving shaft;
- a second drum associated with a driven shaft; wherein said first and second drum have the same external diameter and said driving and driven shafts are coaxial in the direction of a main axis;
- a driving coil spring arranged around the two drums, having a first and a second end;
- a first sleeve arranged around said spring;
- a second sleeve rotatingly associated with the first sleeve;
- a flange associated with said first drum;
- a control lever acting on said second sleeve to move said first and second sleeve towards said flange which is arranged for acting as a shoulder for said first and second sleeve;
- **characterized in that** the first end of the coil spring is fastened to the first sleeve and the second end is fastened to the second drum and said first sleeve is slidingly associated with said driven shaft.

According to an aspect of the invention, the clutch member comprises an elastic element arranged for generating a force having the same direction as the axis of said driving and driven shafts, with a direction which opposes the movement of said first and second sleeve towards said flange.

According to a further aspect of the invention, said elastic element comprises a counteracting spring arranged between said second drum and said first sleeve.

According to other aspects of the invention, said second sleeve is rotatingly associated with the first sleeve through the interposition of means to reduce sliding friction and said first sleeve is rotatingly associated with said first drum through further means to reduce sliding friction.

Preferably, it is the first sleeve that comes into contact with the flange of the first drum and a pad made of material with a high coefficient of friction can be interposed between the respective contact surfaces.

According to a furtherly preferred aspect, the angle formed between the contact surfaces and the axis of the shafts differs from 90°.

According to a first preferred variant of the invention, useful in the case in which the clutch member is normally open, i.e. in idle mode, there are provided external actuator means of known type, which can be activated selectively by the operator, acting on the control lever to generate a force greater than the sum of the force of the counteracting spring and the minimum force suitable to produce engagement of the clutch member itself, in such a manner as to move the first sleeve against said flange and cause engagement of the clutch member itself.

According to an equivalent variant of the invention, useful in the case in which the clutch member is used as normally closed clutch, there is provided a spring acting constantly on the control lever with a force greater than the sum of the force of the counteracting spring and the minimum force suitable to cause engagement of the clutch member itself, in such a manner as to hold the first sleeve against said flange. In this variant there are also provided traction means acting on the same control lever, selectively activatable by the operator, arranged for overcoming the force exerted by said spring and for moving said control lever away from said second sleeve, causing disengagement of the motion transmission member.

The invention presents numerous advantages:

- due to the fact that the first end of the coil spring is fastened to the first sleeve, while the second is fastened to the second drum, the spring and the first and second drum never rotate when no motion is transmitted between the two shafts;

- due to the opposing action of the counteracting spring arranged between the second drum and the first sleeve unintentional actuation of the transmission mechanism is impossible;

- due to the known ratio that links the minimum force necessary to cause winding of the coil spring around the two drums, to the maximum force transmitted, to the number of coils of the driving spring itself, and to the coefficient of friction between the surfaces of the planes that come into contact, through the appropriate choice of these components it is possible to reduce at will said minimum initial actuating force, even in the presence of maximum forces transmitted of high values;

- due to the possibility of choosing the amplitude of the angle formed between the rotation axis and the surfaces of the planes in contact of the flange and of the first sleeve, it is possible to furtherly reduce the initial actuating force of the clutch member;

- due to the presence of a bearing between the first and the second sleeve, there is never sliding friction and generation of heat therebetween;

- due to the fact that the control lever acts on the second sleeve without it rotating together with the transmission mechanisms, there is no friction and generation of heat between the lever and the second sleeve, even if the member remains engaged at length or is normally closed.

The advantages of the invention will be more apparent below, in the description of preferred embodiments, provided by way of non-limiting example, and with the aid of accompanying drawings wherein:

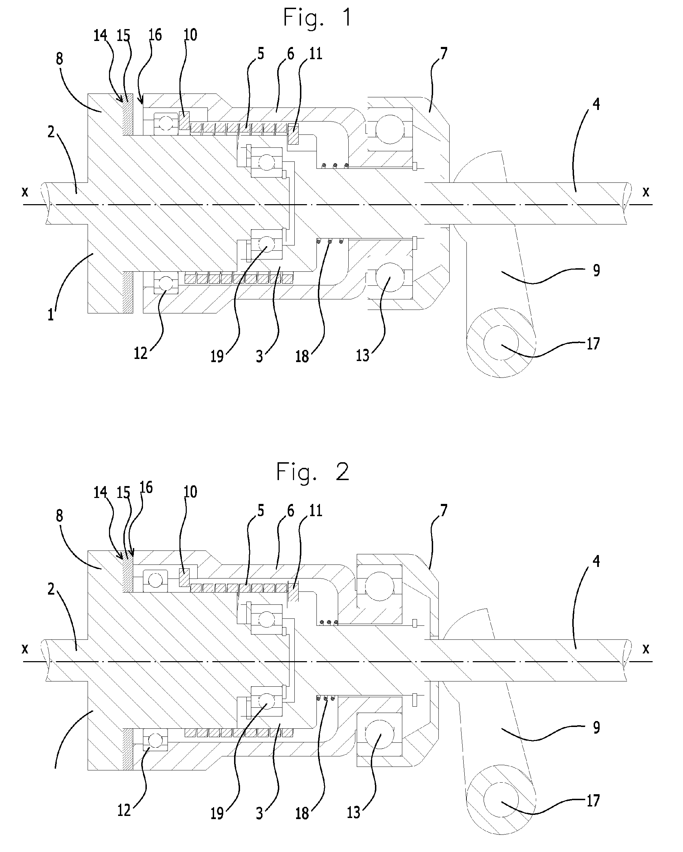

Figs. 1 and 2 represent, in section according to a longitudinal plane, a clutch member with motion transmission mechanism with coil spring and friction engagement according to the invention, shown respectively in conditions of non-transmission and of transmission of motion, in the version suitable to operate in normally open mode;

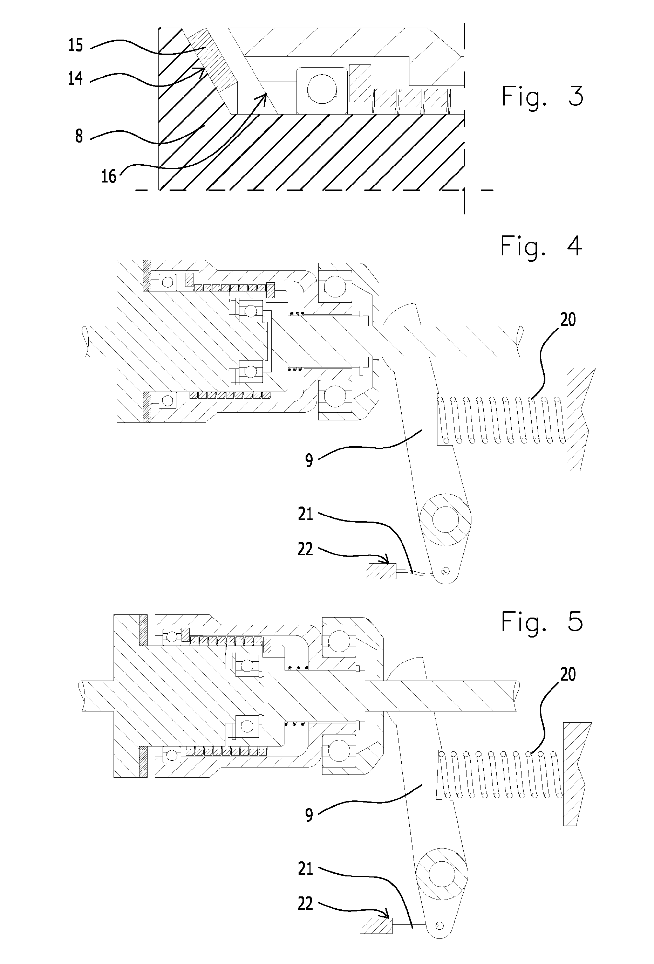

Fig. 3 represents a detail of the clutch member according to another embodiment of the invention;
Figs. 4 and 5 represent, in section according to a longitudinal plane, a clutch member with motion transmission mechanism with coil spring and friction engagement according to the invention, shown respectively in conditions of transmission and of non-transmission of motion, in the version suitable to operate in normally closed mode.

With reference to Figs. 1-2, there is shown a clutch member with motion transmission mechanism with coil spring and friction engagement, of the normally open type, comprising a first drum 1 associated with a drive shaft 2 and a second drum 3 associated with a driven shaft 4, wherein said first and said second drum have the same external diameter and said driving and driven shafts are coaxial, i.e. are arranged along a same axis X.

The transmission mechanism comprises a coil spring 5 arranged around the two drums 1 and 3, a first sleeve 6 arranged around said spring 5, slidingly associated with said driven shaft 4, a second sleeve 7 rotatingly associated with the first sleeve 6, a flange 8 associated with said first drum 1, a control lever 9 acting on said second sleeve 7 to move said first and second sleeve towards said flange 8, in opposition with a resisting elastic force generated by a counteracting spring 18.

The coil spring 5 is produced with wire with substantially square section and comprises a first end 10 fastened to said first sleeve 6 and a second end 11 fastened to said second drum 3.

The first sleeve 6 is rotatingly associated with the first drum 1 as a result of a ball bearing 12 interposed therebetween. Said ball bearing 12 can be omitted in the case in which there is no contact between the first sleeve 6 and the first drum 1.

The second sleeve 7 is rotating associated with the first sleeve 6 as a result of a ball bearing 13 interposed therebetween.

The flange 8 comprises a shoulder plane 14, to which there can be applied a pad 15 made of material with a high coefficient of friction, such as rubber, arranged for cooperating by sliding with a corresponding contact plane 16, which faces it, belonging to the first sleeve 6. The planes 14 and 16 form with the axis X an angle $\alpha$ that can be of around 90°, as shown in Figs. 1 and 2, or of different amplitude, as shown in Fig. 3.

The control lever 9 is rotatingly associated with a fixed pin 17 in such a manner as to transmit, at the discretion of the operator acting thereon with actuator means, not shown, a force on the second sleeve 7 substantially directed along the axis X and with direction such as to cause movement of the sleeves 6 and 7 towards the flange 8.

Between the second drum 3 and the first sleeve 6 there is interposed a counteracting spring 18, arranged for generating said resisting elastic force which opposes movement of said first and second sleeve towards said flange 8.

Between the first drum 1 and the second drum 3 there is interposed a bearing 19, arranged for allowing mutual rotation without sliding friction between the two members.

With reference to Figs. 4-5, there is shown a clutch member with motion transmission mechanism with coil spring and friction engagement, of the normally closed type, comprising all the components already illustrated above and with the same functions, besides a spring 20 acting constantly on the control lever 9, with a force greater than the one given by the sum of the force exerted by the counteracting spring 18 and the minimum force necessary to engage the clutch member itself, in such a manner as to hold the flange 8 and the first sleeve 6 constantly in mutual contact, ensuring constant engagement of the transmission member.

The clutch member illustrated also comprises a cable 21 connected between the lever 9 and actuator means 22, for example of the pedal type, arranged for transmitting on the lever 9 a tractive force which, opposing the force generated by the spring 20, causes separation between the flange 8 and the first sleeve 6, and consequent disengagement of the transmission member.

Also in this variant of the invention the external force to be applied to disengage the transmission member can be very small and substantially independent from the force transmitted between the two shafts.

Operation of the clutch member is as follows.

In the case of normally open clutch, when the engine is started the drum 1, connected to the driving shaft 2, starts to rotate together with the flange 8, while the drum 3, the driven shaft 4, the spring 5, the first sleeve 6, the second sleeve 7 and the components connected thereto remain motionless.

When with the control lever 9 a suitable force is exerted on the second sleeve 7, parallel to the direction of the rotation axis X, i.e. such as to overcome the resistance represented by the elastic force developed by the counteracting spring 18, an axial movement of the first sleeve 6 is produced until the contact plane 16 is touching the pad 15 which may be associated with the shoulder plane 14 of the flange 8.

As the flange 8 rotates constantly together with the driving shaft 2, it tends to drive in rotation the first sleeve 6 due to the friction force generated between the pad 15 and the thrust plane 16. Rotation of the first sleeve 6 causes rotation of the first end 10 of the coil spring 5, which consequently closes compressing between its coils the two drums of equal external diameter 1 and 3, the direction of winding of the spring 5 being concordant with the direction of rotation of the driving shaft 2.

This closing makes the driving shaft 2 and the driven shaft 4 integral and obliges them to rotate with the same angular velocity, in a transient time that depends on the load acting on the driven shaft 4 and on the geometrical characteristics and the materials of the spring 5, of the drums 1 and 3, of the pad 15, of the thrust surface 16, etc..

When the control lever 9 no longer exerts any thrust force on the second sleeve 7, the thrust surface 16 detaches from the pad 15, also due to the elastic return force generated by the counteracting spring 18, the coil spring 5 tends to re-expand and therefore to make rotation of the driving shaft 2 once again independent from the driven shaft 4 which quickly stops rotating.

The characteristic of the clutch member lies in the fact that the tangential force required to close the spring 5 around the two drums 1 and 3, i.e. the force to be exerted at the end 10 of the same spring to cause engagement of the mechanical member, is much lower than the force that is created on the central coil of the spring, i.e. the coil that actually acts as connection between drum of the driving shaft and drum of the driven shaft and that in fact transmits the maximum force.

If the spring 5 is symmetrical with respect to the two drums 1 and 3, the value of the engagement force is identical for the two ends 10 and 11. Its very low value also allows said ends of the spring 5 to be easily connected to the respective components of the transmission member.

In fact, the more coils there are separating the centre of the spring 5 from its periphery, the smaller the engagement force that must be exerted between the thrust plane 16 and friction pad 15 will be, in order for the spring to close on the drums 1 and 3 and the force required for transmission of the driving force to be determined on the central coil. This engagement force is correlated to the external diameter of the drum 1 of the driving shaft 2 and to the coefficient of friction between pad 15 and thrust surface 16.

The force To to be exerted at the first end 10 of the spring 5, which is equal to the engagement force, is expressed by the following formula:

$$T_0 = \frac{T_M}{e^{f\,2\,\pi n}}$$

wherein:

$T_0$ is the engagement force;

$T_M$ is the maximum force acting on the central coil of the spring 5;

f is the coefficient of friction between the internal surface of the spring 5 and the external surface of the drum 1 (if both are made of iron, equal to around 0.2);

n is the number of coils counted from the central coil.

Observing the formula it is evident that the more coils there are separating the central coil of the spring 5 from its periphery, the smaller the force required to actuate the clutch will be, as the value of the forces acting on the single coils decreases from the centre toward the periphery by exponential law, and this force (To) can be greatly below the force ($T_M$) that determines the value of the driving torque to be actually transmitted.

This is very important if the machine tools in which the clutch member according to the first variant of the invention is used require a normally open clutch, which must be engaged only through the voluntary action of the operator on a control lever. In the clutch member according to the invention, the force required for actuation can be so low that it does not require any effort by the operator who, for example, simply by holding the guiding handlebars of the machine tool, already exerts this force without even feeling it.

In the case of normally closed clutch, the member acts as any clutch of a mechanical transmission between rotating shafts, in which the driven shaft always rotates in unison with the driving shaft.

If the two shafts must be disconnected, for example to stop the vehicle, or to change gear, or to cut off the power to the working tools, it is sufficient to exert on the control lever 9, through the pedal actuator means 22 and the cable 21 connected therebetween, a force adequate to overcome the force opposed by the spring 20 in such a manner as to cause detachment of the first sleeve 6 from the flange 8 and consequent disengagement of the clutch member.

As is apparent to those skilled in the art, the invention has been described with reference, by way of example, to moving machine tools and vehicles, but can be used in all those applications in which it is necessary to have an easily actuated normally open or normally closed clutch member, always achieving the advantages described above.

Naturally, the constructional details and the embodiments can be widely varied with respect to those described and illustrated, without however departing from the scope of the present invention, as described, illustrated and claimed.

**Claims**

1. A clutch member with motion transmission mechanism with coil spring and friction engagement comprising:

   - a first drum (1) associated with a driving shaft (2);

   - a second drum (3) associated with a driven shaft (4);

   wherein said first and second drum (1, 3) have the same external diameter and said driving (2) and driven (4) shafts are coaxial in the direction of a main axis (X);

   - a driving coil spring (5) arranged around the two drums (1, 3), having a first and a second end (10, 11);

   - a first sleeve (6) arranged around said spring (5);

   - a second sleeve (7) rotatingly associated with the first sleeve (6);

   - a flange (8) associated with said first drum (1);

   - a control lever (9) acting on said second sleeve (7) to move said first and second sleeve (6, 7) towards said flange (8) which is arranged for acting as a shoulder for said first and second sleeve (6, 7);

   **characterized in that** the first end (10) of the coil spring (5) is fastened to the first sleeve (6) and the second end (11) is fastened to the second drum (3) and said first sleeve (6) is slidingly associated with said driven shaft (4).

2. A clutch member according to claim 1, **characterized in that** it comprises an elastic element arranged for generating a force having the same direction as the main axis (X) of said driving and driven shafts (2, 4), with a direction which opposes the movement of said first and second sleeve (6, 7) towards said flange (8).

3. A clutch member according to claim 2, **characterized in that** said elastic element comprises a counteracting spring (18) arranged between said second drum (3) and said first sleeve (6).

4. A clutch member according to claim 1, **characterized in that** said second sleeve (7) is rotatingly associated with the first sleeve (6) through the interposition of means (13) to reduce sliding friction.

5. A clutch member according to claim 1, **characterized in that** said first sleeve (6) is rotatingly associated with said first drum (1) through means (12) to reduce sliding friction.

6. A clutch member according to claim 1, **characterized in that** said first sleeve comprises a thrust plane (16) arranged for cooperating with said shoulder plane (14) of said first drum (1), wherein said planes are orthogonal to the main axis (X).

7. A clutch member according to claim 6, **characterized in that** a pad (15) made of material with a different coefficient of friction is interposed between said thrust plane (16) and said shoulder plane (14).

8. A clutch member according to claim 6, **characterized in that** said planes (14, 16) form an angle (α) with the main axis (X) differing from 90°.

9. A clutch member according to at least one of the preceding claims, **characterized in that** it comprises external drive means which can be activated selectively by the operator, acting on the control lever (9) to generate a force greater than the sum of the force of the counteracting spring (18) and the minimum force suitable to produce engagement of the clutch member itself, in such a manner as to move the first sleeve (6) against said flange (8) and cause engagement of the clutch member itself.

10. A clutch member according to at least one of the preceding claims, **characterized in that** it comprises elastic means (20) acting constantly on the control lever (9) with a force greater than the sum of the force of the counteracting spring (18) and the minimum force suitable to cause engagement of the clutch member itself, in such a manner as to hold the first sleeve (6) against said flange (8) and comprises traction means (21, 22) acting on the same control lever (9), selectively activatable by the operator, arranged for overcoming the force exerted by said spring (20) and for moving said control lever (9) away from said second sleeve (7), causing disengagement of the motion transmission member.

11. A machine tool, **characterized in that** it comprises a clutch member according to one or more of the preceding claims.

12. A vehicle **characterized in that** it comprises a clutch member according to one or more of the preceding claims.

## Fig. 1

## Fig. 2

Fig. 3

Fig. 4

Fig. 5

EP 2 280 182 A1

Europäisches
Patentamt
European
Patent Office
Office européen
des brevets

# EUROPEAN SEARCH REPORT

Application Number

EP 10 17 1318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 1 501 978 A (WEBB ERNEST H) 22 July 1924 (1924-07-22) | 1,2,6,8,9 | INV. F16D13/58 F16D13/08 |
| A | * figures 1,2 * | 3 | |
| Y | US 4 440 280 A (HAGIHARA HIDEAKI [JP]) 3 April 1984 (1984-04-03) * figures 6,7 * | 1,2,6,8,9 | |
| A | US 3 197 002 A (COOPER LEON M) 27 July 1965 (1965-07-27) * figures 1,2 * | 1,9,10 | |
| A | US 4 294 339 A (GRANGER BRUCE A ET AL) 13 October 1981 (1981-10-13) * figure 1 * | 1,2,12 | |

TECHNICAL FIELDS
SEARCHED      (IPC)

F16D

The present search report has been drawn up for all claims

| Place of search | Date of completion of the search | Examiner |
|---|---|---|
| The Hague | 3 September 2010 | Székely, Zsolt |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

9

## ANNEX TO THE EUROPEAN SEARCH REPORT
## ON EUROPEAN PATENT APPLICATION NO.

EP 10 17 1318

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2010

| Patent document cited in search report | | Publication date | Patent family member(s) | | Publication date |
|---|---|---|---|---|---|
| US 1501978 | A | 22-07-1924 | NONE | | |
| US 4440280 | A | 03-04-1984 | JP | 57033326 U | 22-02-1982 |
| | | | JP | 62046906 Y2 | 22-12-1987 |
| US 3197002 | A | 27-07-1965 | GB | 970153 A | 16-09-1964 |
| US 4294339 | A | 13-10-1981 | NONE | | |

For more details about this annex : see Official Journal of the European Patent Office, No. 12/82

## REFERENCES CITED IN THE DESCRIPTION

**Patent documents cited in the description**

- US 4440280 A